# EUROPÄISCHE PATENTANMELDUNG

(11) **EP 1 209 046 A1**
(43) Veröffentlichungstag der Anmeldung: **29.05.2002**
(21) Anmeldenummer: 01127431.3
(22) Anmeldetag: 26.11.2001
(51) Int. Cl.: B60R 21/26

(54) **Gasgenerator**

(30) Priorität: 27.11.2000 DE 20020099 U
(71) Anmelder: TRW Airbag Systems GmbH & Co. KG, 84544 Aschau am Inn (DE)
(72) Erfinder: Vetter, Johann, 84478 Waldkraiburg (DE)
(74) Vertreter: Kitzhofer, Thomas, Dipl.-Ing.

(57) **Zusammenfassung**

Ein Gasgenerator mit einem Außengehäuse aus Kunststoff, in dem ein pyrotechnischer Treibsatz (16) und ein Zünder (18) mit einem eigenen Zündergehäuse untergebracht sind, ist dadurch gekennzeichnet, daß das Zündergehäuse wenigstens abschnittsweise aus Kunststoff besteht und mit dem Außengehäuse verschweißt ist.

## Beschreibung

Die Erfindung betrifft einen Gasgenerator mit einem Außengehäuse aus Kunststoff, in dem ein pyrotechnischer Treibsatz und ein Zünder mit einem eigenen Zündergehäuse untergebracht sind.

Es sind bereits Gasgeneratoren mit einem Kunststoffaußengehäuse vorgeschlagen und getestet worden. Ziel der Erfindung ist es, einen Gasgenerator zu schaffen, bei dem die Abdichtung des Zünders im Kunststoffgehäuse auf einfache Weise und vor Feuchteeintritt geschützt ausgeführt werden kann

Dies wird bei einem Gasgenerator der eingangs genannten Art dadurch erreicht, daß das Zündergehäuse wenigstens abschnittsweise aus Kunststoff und mit dem Außengehäuse verschweißt ist. Das Anschweißen des Zünders erfolgte bislang stets nur über metallische Abschnitte desselben, nicht aber über Abschnitte aus Kunststoff. Durch die Erfindung wird es möglich, die Verbindung der Einzelteile bei der Herstellung des Gasgenerators zu vereinheitlichen, indem ausschließlich Schweißen von Kunststoff vorgesehen wird. So kann der Zünder, der üblicherweise als Zulieferteil bezogen wird, einfach in ein Gehäuseteil eingeschweißt werden, und das Gehäuse, sofern es aus mehreren Teilen besteht, wird anschließend ebenfalls durch Schweißen geschlossen. Durch das Schweißen des Kunststoffs lassen sich ohne Zwischenlegung von zusätzlichen Dichtungselementen gasdichte und vor Feuchteeintritt geschützte Verbindungen realisieren.

Gemäß der bevorzugten Ausführungsform ist die Schweißung eine Ultraschallschweißung, also ein sehr kostengünstiges Verfahren.

Der Zünder hat darüber hinaus vorzugsweise elektrische Anschlußleitungen, die sich durch wenigstens eine Öffnung im Gasgeneratoraußengehäuse erstrecken. Das Zündergehäuse dichtet nach der Verschweißung die Öffnung ab, so daß keine Feuchte in das Innere des Gasgenerators gelangen kann und kein Gas beim Aktivieren des Gasgenerators über die Öffnung austreten kann. Der Zünder, genauer gesagt der Abschnitt des Zünders, der aus Kunststoff ist und am Außengehäuse angeschweißt wird, hat deshalb eine Doppelfunktion, denn er dient auch als Verschluß für die Öffnung zur Durchführung der Anschlußleitungen. Ein Vergießen der Öffnungen, wie dies im Stand der Technik bislang stets vorgeschlagen wurde, kann entfallen.

Das Außengehäuse hat vorzugsweise ein topfförmiges Aufnahmeteil für den Treibsatz und einen Deckel, an dem der Zünder angeschweißt ist. Das Aufnahmeteil und der Deckel sind ebenfalls miteinander verschweißt, so daß dieselbe Verbindungsart gewählt ist.

Ein radialer Spalt zwischen dem Aufnahmeteil und dem Deckel kann vorgesehen sein, in den ein Vorsprung des Zünders ragt, wodurch dieser zusätzlich noch lagegesichert wird. Gegebenenfalls kann diese Lagesicherung zusätzliche Kräfte aufnehmen, so daß die Schweißnaht zwischen Zünder und Außengehäuse nicht die gesamte mechanische Belastung aufnehmen muß.

Eine besonders einfache Ausführungsform zeichnet sich dadurch aus, daß im Deckel Kontakthülsen eingebettet sind, in die Kontaktstifte am Zünder innenseitig eingeführt sind. Die Kontakthülsen sind auf ihren äußeren Enden ferner vorzugsweise mit Anschlußkabeln verbunden. So kann beispielsweise eine einfache elektrische Kontaktierung erreicht werden, indem die durch Umspritzen oder Vergießen in den Deckel eingebetteten Kontakthülsen samt Anschlußleitungen zusammen mit dem Deckel eine vormontierte Einheit bilden, in die dann nur noch der Zünder von der Innenseite eingesteckt werden muß.

Weitere Merkmale und Vorteile der Erfindung ergeben sich aus der nachfolgenden Beschreibung und aus den Zeichnungen.

Figur 1 zeigt einen Längsschnitt durch eine Ausführungsform des erfindungsgemäßen Gasgenerators und

Figur 2 einen Längsschnitt durch eine zweite Ausführungsform des erfindungsgemäßen Gasgenerators.

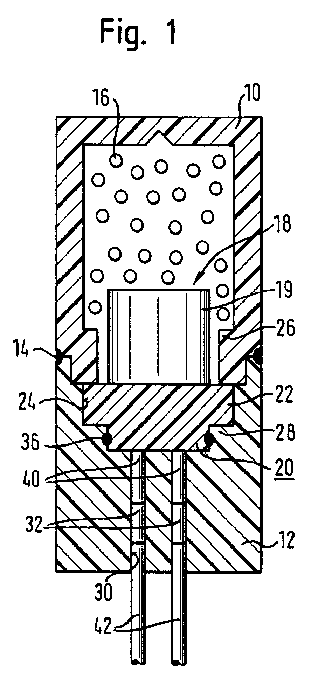

In Figur 1 ist ein Gasgenerator dargestellt, dessen Außengehäuse aus zwei Teilen besteht, nämlich aus einem topfförmigen Aufnahmeteil 10 und einem das Aufnahmeteil 10 verschließenden Deckel 12. Aufnahmeteil 10 und Deckel 12 sind aus demselben Kunststoff und bilden ein gasdichtes, gegen Feuchteeintritt geschütztes Gehäuse. Durch eine Ultraschallschweißung, die durch die Schweißnaht 14 symbolisiert ist, sind Aufnahmeteil 10 und Deckel 12 miteinander verbunden. Im Aufnahmeteil 10 ist ein pyrotechnischer Treibsatz 16 untergebracht sowie ein elektrischer Zünder 18. Der Zünder 18 hat ein mehrteiliges aus einem Oberteil 19 und einem Sockel 20 bestehendes Außengehäuse, das vorzugsweise nach außen komplett geschlossen ist, wodurch der Zünder eine vormontierte Einheit bildet, in der ein weiterer pyrotechnischer Treibsatz (nicht gezeigt) enthalten ist. Der Sockel 20 ist aus Kunststoff, wobei der Kunststoff derselbe Kunststoff wie der für das Aufnahmeteil 10 und den Deckel 12 ist.

Der Sockel 20 weist einen radialen umlaufenden Vorsprung 22 auf, der in einem radialen Spalt 24 zwischen einem radial einwärtigen Vorsprung 26 des Aufnahmeteils 10 und einem Absatz 28 im Deckel 12 liegt. Der Absatz 28 ist eine der Flächen, welche eine Öffnung im Deckel 12 definiert, die nach außen in zwei kleine Öffnungen 30 übergeht, in der Kontakthülsen 32 aus Messing eingesetzt sind.

Der Vorsprung 22 des Sockels 20 ist axial möglichst im radialen Spalt 24 zwischen dem Aufnahmeteil 10 und dem Deckel 12 geklemmt. Die eigentliche Befestigung des Zünders 18 am Deckel 12 erfolgt durch eine Schweißung zwischen dem Sockel 20 und dem Deckel 12, die durch eine umlaufende, geschlossene Schweißnaht 36 symbolisiert ist.

Rückseitig vom Sockel 20 treten Kontaktstifte 40 aus dem Sockel heraus, die in die Kontakthülsen 32 gesteckt sind. Die äußeren Enden der Kontakthülsen 32 nehmen Anschlußleitungen in Form von Anschlußkabeln 42 auf, wobei die äußeren Enden der Kontakthülsen 32 zusammengepreßt sind, um dadurch die Anschlußkabel 42 zu fixieren.

Die Herstellung des Gasgenerators, der vorzugsweise ein extrem kleiner Gasgenerator für den Antrieb eines Gurtstraffers ist, erfolgt folgendermaßen: Zuerst werden die Kontakthülsen an ihren äußeren Enden mit den Anschlußkabeln 42 bestückt und zusammengepreßt. Anschließend werden sie in eine Form gelegt, in der der Deckel 12 gespritzt oder gegossen wird, so daß die Kontakthülsen 32 in den Deckel 12 eingebettet sind. Die Öffnungen 30 sind damit gasdicht und vor Feuchteeintritt abgedichtet, ohne daß zusätzliche Dichtungselemente notwendig sind.

Anschließend wird der Zünder 18, in bezug auf Figur 1, von oben in die Kontakthülsen 32 gesteckt, so daß die Kontaktstifte 40 in die zugehörigen Kontakthülsen 32 ragen. Nun wird der Sockel des Zünders 18 mit dem Deckel 12 ultraschallverschweißt, so daß sich eine zusätzliche Abdichtung der Öffnungen 30 durch den Sockel ergibt, denn die Schweißnaht 36 ist umlaufend, gasdicht und ist eine Barriere vor Feuchteeintritt.

Parallel hierzu wird in das Aufnahmeteil 10 der Treibsatz 16 gefüllt, wobei der Platz für den später in den Treibsatz 16 ragenden Zünder 18 ausgespart wird.

Schließlich werden Aufnahmeteil 10 und Deckel 12 samt Zünder 18 ineinandergesteckt und längs der Schweißnaht 14 ultraschallverschweißt, wobei auch diese Schweißnaht 14 umlaufend geschlossen ausgebildet und gasdicht ist sowie vor einem Feuchteeintritt schützt.

Der elektrische Zünder 18 kann ein Gehäuse komplett aus Kunststoff haben oder nur einen Abschnitt aus Kunststoff, wie beispielsweise den Sockel oder, wenn das Gehäuse großteils aus miteinander verbundenen Blechabschnitten besteht, aus einem Kunststoffring, welcher Blechteile miteinander verbindet und abdichtet.

Der gezeigte Gasgenerator zeichnet sich durch kleine Abmessungen sowie eine einfache Herstellung aus, die in wenigen Herstellungsschritten unter Beibehaltung eines Herstellungsprozesses (Ultraschallschweißen) durchgeführt werden kann. Der Treibsatz hat keine Filterkammer, um zusätzlich Bauraum zu sparen.

Bei der in Figur 1 dargestellten Ausführungsform ist das Zündergehäuse in sich geschlossen und bildet eine vom Außengehäuse getrennt vorgefertigte Einheit.

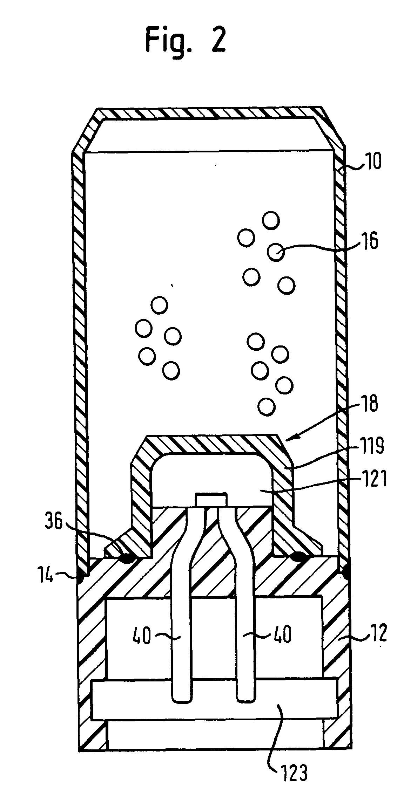

Bei der Ausführungsform nach Figur 2 sind die bereits im Zusammenhang mit Figur 1 erläuterten Teile, die funktional gleich geblieben sind, mit den bereits eingeführten Bezugszeichen versehen.

Von dieser ersten Ausführungsform unterscheidet sich die in Figur 2 gezeigte Ausführungsform dadurch, daß der Zünder vor der Befestigung am Außengehäuse kein in sich geschlossenes Zündergehäuse aufweist und damit auch keine getrennt vorgefertigte Einheit bildet. Vielmehr besteht das Zündergehäuse aus einer Kappe 119, d.h. einem Hohlkörper, aus Kunststoff, die auf den Deckel 12 aufgeschweißt ist. Das Bezugszeichen 36 bezeichnet wieder die umlaufende Schweißnaht. In die Kappe 119 wird vor dem Aufsetzen auf den Deckel 12 eine Zünderladung eingefüllt. Im Deckel 12 vergossene Kontaktstifte 40 ragen in den durch die Kappe 119 begrenzten Raum 121. Rückseitig ragen die Kontaktstifte 40 in eine Öffnung 123 im Deckel 12, in den noch ein Haltering samt Kurzschlußfeder (nicht gezeigt) eingesetzt und anschließend ein Stecker zum Anschluß an eine Auslösesteuerung eingeführt wird.

## Patentansprüche

1. Gasgenerator mit
einem Außengehäuse aus Kunststoff, in dem ein pyrotechnischer Treibsatz (16) und ein Zünder (18) mit einem eigenen Zündergehäuse untergebracht sind,
**dadurch gekennzeichnet, daß** das Zündergehäuse wenigstens abschnittsweise aus Kunststoff besteht und mit dem Außengehäuse verschweißt ist.

2. Gasgenerator nach Anspruch 1, **dadurch gekennzeichnet, daß** die Schweißung eine Ultraschallschweißung ist.

3. Gasgenerator nach einem der vorhergehenden Ansprüche, **dadurch gekennzeichnet, daß** der Zünder (18) elektrische Anschlußleitungen hat, die sich durch wenigstens eine Öffnung (30) im Außengehäuse erstrecken, wobei das Zündergehäuse durch die Verschweißung die Öffnung (30) abdichtet.

4. Gasgenerator nach einem der vorhergehenden Ansprüche, **dadurch gekennzeichnet, daß** das Zündergehäuse einen Sockel (20) aus Kunststoff hat.

5. Gasgenerator nach einem der vorhergehenden Ansprüche, **dadurch gekennzeichnet, daß** das Außengehäuse ein topfförmiges Aufnahmeteil (10) für den Treibsatz (16) und einen Deckel (12) hat, an dem der Zünder (18) angeschweißt ist, wobei Aufnahmeteil (10) und Deckel (12) miteinander verschweißt sind.

6. Gasgenerator nach Anspruch 5, **dadurch gekennzeichnet, daß** ein radialer Spalt (24) zwischen Aufnahmeteil (10) und Deckel (12) vorgesehen ist, in den ein Vorsprung (22) des Zünders (18) ragt.

7. Gasgenerator nach Anspruch 5 oder 6, **dadurch gekennzeichnet, daß** in dem Deckel (12) Kontakthülsen (32) eingebettet sind, in die Kontaktstifte (40) am Zünder (18) innenseitig eingeführt sind.

8. Gasgenerator nach Anspruch 7, **dadurch gekennzeichnet, daß** die Kontakthülsen (32) an ihren äußeren Enden mit Anschlußkabeln (42) verbunden sind.

9. Gasgenerator nach Anspruch 8, **dadurch gekennzeichnet, daß** die Kontakthülsen (32) samt Anschlußkabel (42) bei der Herstellung des Deckels (12) im Deckel (12) durch Umspritzen oder Vergießen eingebettet sind.

10. Gasgenerator nach einem der Ansprüche 5 bis 9, **dadurch gekennzeichnet, daß** der Deckel (12) einen Teil des Zündergehäuses bildet.

11. Gasgenerator nach Anspruch 10, **dadurch gekennzeichnet, daß** das Zündergehäuse eine separate, vorgefertigte Kappe (119) umfaßt, die mit dem Deckel (12) verschlossen wird.

12. Gasgenerator nach Anspruch 11, **dadurch gekennzeichnet, daß** die Kappe (119) aus Kunststoff ist.

13. Gasgenerator nach Anspruch 12, **dadurch gekennzeichnet, daß** der Deckel (12) mit der Kappe (119) verschweißt ist.

14. Gasgenerator nach einem der Ansprüche 1 bis 9, **dadurch gekennzeichnet, daß** das Zündergehäuse in sich geschlossen ist und eine vom Außengehäuse getrennt vorgefertigte Einheit ist.
